# EUROPÄISCHE PATENTSCHRIFT

(11) **EP 0 801 103 B1**
(45) Veröffentlichungstag und Bekanntmachung des Hinweises auf die Patenterteilung: **07.07.1999**
(21) Anmeldenummer: 97105894.6
(22) Anmeldetag: 10.04.1997
(51) Int. Cl.: C08K 5/17

(54) **Siliconkautschuke mit verbesserter Fellfestigkeit und niedrigem Druckverformungsrest**
Silicone rubber with enhanced formability into a slab and having a low compression set
Caoutchouc de silicone facilement transformable en bandes continues et à faible déformation permanente

(30) Priorität: 11.04.1996 DE 19614343
(43) Veröffentlichungstag der Anmeldung: 15.10.1997
(73) Patentinhaber: Wacker-Chemie GmbH, 81737 München (DE)
(72) Erfinder: Knies, Wolfgang, Dr., 84489 Burghausen (DE); Guske, Werner, 84375 Kirchdorf a. Inn (DE)
(74) Vertreter: Fritz, Helmut, Dr.

(56) Entgegenhaltungen:
- EP-A- 0 210 402
- EP-A- 0 731 131
- DE-A- 1 642 205
- CHEMICAL ABSTRACTS, vol. 86, no. 22, 30.Mai 1977 Columbus, Ohio, US; abstract no. 156812, LUDECK WOLFGANG: "FOAMED FLUOROSILICONE RUBBER" XP002032679 & DD 114 962 A (LUDECK WOLFGANG) 5.September 1975

## Beschreibung

Die Erfindung betrifft Carbaminat enthaltende Polyorganosiloxankautschukmassen, die in der Wärme zu Elastomeren aushärten, sowie ein Verfahren zu deren Herstellung.

Silikonkautschukmassen, die nach Zusatz von die Vernetzung fördernden Stoffen in der Wärme zu Elastomeren aushärten, werden vor der Vulkanisation mit den die Vernetzung fördernden Stoffen und gegebenenfalls anderen Zusätzen, wie Farbpasten vermischt. Dabei werden die Silikonkautschukmassen zu einer als Fell oder Walzenfell bezeichneten Platte mit einer gewünschten Dicke geformt. Dieses Fell wird auf die erforderliche Größe zugeschnitten oder gestanzt und in eine Preßform eingelegt, bzw. in Bänder geschnitten und in Extruder oder Spritzgießautomaten eingeführt. Anschließend werden die so hergestellten Formkörper in der Wärme zu Elastomeren ausgehärtet.

Das Walzenfell soll eine hohe Festigkeit aufweisen, damit bei seiner Bearbeitung die Form und Dicke der daraus hergestellten Formkörper sich möglichst wenig ändert. Wenn das Walzenfell eine hohe Festigkeit aufweist ist die Reproduzierbarkeit der daraus hergestellten vulkanisierten Teile gut. Bei einer geringen Festigkeit weist das Walzenfell eine geringe Plastizität auf. Dies äußert sich durch ein langsames Zerfließen, ähnlich wie ein Stück Asphalt langsam zerfließt. Weiterhin haftet ein weniger festes Walzenfell stärker auf den Walzen und auf einer Unterlage. Beim Abziehen wird das Fell deshalb leicht deformiert.

Als Zusatzstoffe zur Verbesserung der Fellfestigkeit bekannt sind die Verwendung von Polytetrafluorethylenpulvern alleine oder in Verbindung mit anderen Substanzen oder die Verwendung von aktiven Füllstoffen.

Polytetrafluorethylen alleine oder im Gemisch mit anderen Verbindungen, wie Borsäure wirkt wie ein verstärkender Füllstoff und erhöht dadurch die Fellfestigkeit von Silikonkautschuken. Zugleich wird jedoch aber ein gummiartiges Verhalten eingestellt, das sich darin äußert, daß Walzenfelle nach kurzer Lagerung ihre Form in Richtung der nicht gewalzten Form ändern. Die Felle ziehen sich zusammen und werden dicker. Dies ist äußerst unerwünscht, da der Rohling nicht mehr die benötigte Form aufweist und z.B. die Preßformen in manchen Teilbereichen überfüllt und in anderen Bereichen unterfüllt werden.

Borsäure alleine oder in Verbindung mit Polytetrafluorethylen führt darüber hinaus zu einer Nachvulkanisation. Dies äußert sich in einer Erhöhung des Druckverformungsrestes des Vulkanisats, einer Eigenschaft, die für Dichtungen gering sein sollte.

In US-A-2,803,619 wird beispielsweise der Druckverformungsrest dadurch erniedrigt, daß die Vernetzungsdichte durch vermehrte Zugabe von Vinylgruppen erhöht wird.

Aktive Füllstoffe, wie Kieselsäuren mit hoher Oberfläche erhöhen auch die Fellfestigkeit, erhöhen aber zugleich z.B. die Härte der Silikonkautschukvulkanisate.

Der vorliegenden Erfindung liegt die Aufgabe zugrunde, die Fell festigkeit von Kautschukmassen, die nach Zusatz von die Vernetzung fördernden Stoffen in der Wärme zu Elastomeren aushärten, zu erhöhen, ohne eine Verschlechterung anderer Eigenschaften der Masse, insbesondere der Plastizität und der Haftung des Walzenfells auf einer Unterlage, sowie des Druckverformungsrestes des Vulkanisats in Kauf nehmen zu müssen.

Gegenstand der Erfindung sind Polyorganosiloxankautschukmassen, die in der Wärme zu Elastomeren aushärten, welche
(A) 100 Gewichtsteile eines Polyorganosiloxans der allgemeinen Formel (I)

   R¹ ₓR₃₋ₓSiO(SiR₂O)ₘ(SiRR¹O)ₙSiR₃₋ₓR¹ ₓ, (I),

   wobei
   - **R**: gleiche oder verschiedene, einwertige, gegebenenfalls mit Halogenatomen oder Cyanogruppen substituierte Kohlenwasserstoffreste mit 1 bis 18 Kohlenstoffatomen je Rest,
   - **R**^{**1**}: gleiche oder verschiedene, einwertige, ethylenisch ungesättigte Kohlenwasserstoffreste mit 1 bis 6 Kohlenstoffatomen je Rest,
   - **m**: eine ganze Zahl von 100 bis 20000,
   - **n**: den Wert 0 oder eine ganze Zahl von 1 bis 200 und
   - **x**: die Werte 0 oder 1 bedeuten,
(B) 20 bis 200 Gewichtsteile Füllstoff,
(C) die Vernetzung fördernde Stoffe und
(D) 0,01 bis 1 Gewichtsteile Ammonium-, Alkali- oder Erdalkalicarbaminat
umfassen.

Die Fellfestigkeit der Silikonkautschukmassen wird durch den Zusatz von Carbaminat (D) erhöht. Zugleich wird auch der Druckverformungsrest der vulkanisierten Kautschuke erniedrigt.

Das Polyorganosiloxan (A) besitzt vorzugsweise eine Viskosität von 0,1^{·}10⁶ bis 100^{·}10⁶ mPa^{·}s bei 25°C, bevorzugt 1^{·}10⁶ bis 20^{·}10⁶ mPa^{·}s bei 25°C.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Bevorzugte Beispiele für den Rest R sind C₁₋₈-Alkylreste, insbesondere der Methylrest, und der Phenylrest.

Beispiele für substituierte Reste **R** sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest. Als Halogene sind Fluor und Chlor bevorzugt.

Innerhalb der bzw. entlang der Siloxanketten der allgemeinen Formel (I) können zusätzlich zu den Diorganosiloxaneinheiten (SiR₂O) noch andere Siloxaneinheiten vorliegen. Beispiele für solche anderen, meist lediglich als Verunreinigungen vorliegenden Siloxaneinheiten sind solche der Formeln RSiO_{3/2}, R₃SiO_{1/2} und SiO_{4/2}, wobei **R** jeweils die oben dafür angegebene Bedeutung hat. Die Menge an solchen anderen Siloxaneinheiten als Diorganosiloxaneinheiten beträgt jedoch vorzugsweise höchstens 5 Molprozent, insbesondere höchstens 1 Molprozent, jeweils bezogen auf das Gewicht von Polyorganosiloxan (A).

Beispiele für Reste **R**^{**1**} sind Alkenylreste, wie Vinylrest, Allylrest und Cyclohexenylrest, wobei der Vinylrest bevorzugt ist.

Bevorzugt hat **x** den Wert 1 und besonders bevorzugt hat n den Wert 10 bis 100, d.h. bevorzugt sind die Vinylreste in den endständigen Einheiten und in der Kette.

Es kann eine Art von Polyorganosiloxan (A), es kann auch ein Gemisch aus mindestens zwei verschiedenen Arten von Polyorganosiloxan (A) eingesetzt werden.

Beispiele für Füllstoffe (B) sind nichtverstärkende Füllstoffe, also Füllstoffe mit einer spezifischen Oberfläche (BET) von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips und Glaspulver; verstärkende Füllstoffe, also Füllstoffe mit einer spezifischen Oberfläche (BET) von mehr als 50 m²/g, wie Siliciumdioxid mit einer spezifischen Oberfläche (BET) von mindestens 50 m²/g, wie pyrogen hergestellte Kieselsäure, gefällte Kieselsäure, Ruß, wie Furnaceund Acetylenruß und Silicium-Aluminium-Mischoxide großer BET-Oberfläche.

Die genannten Füllstoffe (B) können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff (B), es kann auch ein Gemisch von mindestens zwei Füllstoffen (B) eingesetzt werden.

Bevorzugt wird pyrogen hergestellte Kieselsäure und gefällte Kieselsäure mit einer spezifischen Oberfläche (BET) von mindestens 50 m²/g, insbesondere mindestens 100 m²/g, verwendet.

Bevorzugt wird Füllstoff (B) in Mengen von 20 bis 100 Gewichtsteilen, bezogen auf 100 Gewichtsteile Polyorganosiloxan (A), eingesetzt.

Die Vernetzung fördernde Stoffe (C) können beispielsweise radikalbildende Vernetzer (C1), Si-gebundene Wasserstoffatome aufweisende Organopolysiloxane (C2) oder übergangsmetall-Hydrosilylierungskatalysatoren (C3) sein. Wenn die Polyorganosiloxankautschukmassen durch Hydrosilylierung in der Wärme zu Elastomeren aushärten, enthalten die Massen sowohl Si-gebundene Wasserstoffatome aufweisende Organopolysiloxane (C2) als auch Übergangsmetall-Hydrosilylierungskatalysatoren (C3).

Als radikalbildende Vernetzer (C1) sind Peroxide, insbesondere organische Peroxide, bevorzugt. Beispiele für solche organischen Peroxide sind Acylperoxide, wie Dibenzoylperoxid, Bis(4-chlorbenzoyl)-peroxid und Bis-(2,4-dichlorbenzoyl)-peroxid; Alkylperoxide und Arylperoxide, wie Dimethylperoxid, Di-tert.-butylperoxid und Dicumylperoxid; Perketale, wie 2,5-Bis-(tert.-butylperoxy)-2,5-dimethylhexan; Perester, wie Diacetylperoxydicarbonat und tert.-Butylperbenzoat.

Vorzugsweise werden radikalbildende Vernetzer (C1) in Mengen von 0,1 bis 5 Gewichtsteilen, insbesondere 0,2 bis 2,0 Gewichtsteilen, jeweils bezogen auf 100 Gewichtsteile Polyorganosiloxan (A), verwendet.

Als Vernetzer können Si-gebundene Wasserstoffatome aufweisende Polyorganosiloxane (C2) verwendet werden. Die Polyorganosiloxane (C2) können linear, cyclisch oder verzweigt sein. Vorzugsweise enthalten die Polyorganosiloxane (C2) mindestens 3 Si-gebundene Wasserstoffatome.

Als Polyorganosiloxane (C2) werden vorzugsweise Polyorganosiloxane der allgemeinen Formel (II)

H_{g}R² _{3-g}SiO(SiR² ₂O)ₖ(SiR²HO)ₗSiR²)_{3-g}H_{g} (II),

eingesetzt, wobei
- **R**^{**2**}: die Bedeutungen von **R**,
- **g**: die Werte 0 oder 1 und
- **k und l**: jeweils den Wert 0 oder eine ganze Zahl von 1 bis 100
bedeuten.

Beispiele und bevorzugte Beispiele für die Reste **R**^{**2**} sind vorstehend bei den Beispielen für die Reste **R** aufgeführt. Vorzugsweise sind die Reste **R**^{**2**} gesättigte Alkylreste oder Phenylreste.

Vorzugsweise bedeuten **k** und **l** jeweils Werte 0 oder eine ganze Zahl von 1 bis 50. Vorzugsweise beträgt die Summe aus **k** und **l** Werte von 1 bis 50, insbesondere von 1 bis 20.

Beispiele für Polyorganosiloxane (C2) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxanund Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Polyorganosiloxan (C2) wird vorzugsweise in Mengen von 0,5 bis 6, bevorzugt 1 bis 3, besonders bevorzugt 1,5 bis 2,5, Grammatom Si-gebundenen Wasserstoffs je Mol ethylenisch ungesättigte Bindung in den Resten **R**^{**1**} des Polyorganosiloxans (A) eingesetzt.

Als übergangsmetall-Hydrosilylierungskatalysator (C3) können prinzipiell alle üblicherweise in additionsvernetzenden Siliconkautschukmassen eingesetzten Katalysatoren verwendet werden. Hierzu zählen die Elemente und Verbindungen von Platin, Rhodium, Palladium, Ruthenium und Iridium, vorzugsweise Platin. Die übergangsmetalle können gegebenenfalls auf feinteiligen Trägermaterialien, wie Aktivkohle, Metalloxiden, wie Aluminiumoxid oder pyrogen hergestelltem Siliciumdioxid fixiert sein.

Vorzugsweise werden als Hydrosilylierungskatalysator (C3) Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂^{·}Olefin)₂ und H(PtCl₃^{·}Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂^{·}C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart·von Natriumbicarbonat in ethanolischer Lösung. Besonders bevorzugt sind Komplexe des Platins mit Vinylsiloxanen, wie sym-Divinyltetramethyldisiloxan.

Vorzugsweise werden Übergangsmetall-Hydrosilylierungskatalysatoren (C3) in Mengen von mindestens 10⁻⁴, insbesondere mindestens 10⁻³ Gewichtsteile, bis höchstens 10⁻¹, insbesondere höchstens 10⁻² Gewichtsteile berechnet als Übergangsmetall, jeweils bezogen auf 100 Gewichtsteile Polyorganosiloxan (A), verwendet.

Das Carbaminat (D) ist ein Salz mit dem Anion H₂NCOO⁻. Von den Alkalicarbaminaten sind Natrium- und Kaliumcarbaminat, von den Erdalkalicarbaminaten sind Magnesium- und Calciumcarbaminat bevorzugt. Insbesondere bevorzugt ist Ammoniumcarbaminat. Carbaminat (D) kann entweder als reiner Stoff oder als Lösung in Wasser zugegeben werden. Bevorzugt ist die Zugabe als reiner Stoff. Mengen unter 0,01 Gewichtsteilen bringen nicht den gewünschten Effekt, Mengen über 1 Gewichtsteil dagegen führen zu einem Zerfallen der Kautschukmischung in viele kleine Partikel im Mischer, die nur unter erhöhtem Aufwand wieder in eine kompakte Masse übergeführt werden können. Bevorzugt werden Mengen von mindestens 0,1 Gewichtsteilen, und höchstens 0,5, insbesondere höchstens 0,4 Gewichtsteilen, jeweils bezogen auf 100 Gewichtsteile Polyorganosiloxan (A) zugegeben.

Die Polyorganosiloxankautschukmassen können noch niederviskose Organosiliciumverbindungen (E) als Antistrukturmittel enthalten.

Organosiliciumverbindungen (E) weisen vorzugsweise die allgemeine Formel (III)

R³OR⁴ ₂SiO(SiR⁴ ₂O)ₚR³ (III),

auf, wobei
- **R**^{**3**}: ein Wasserstoffatom oder einen einwertigen Kohlenwasserstoffrest mit 1 bis 18 Kohlenstoffatomen je Rest, der gegebenenfalls durch ein Ethersauerstoffatom unterbrochen ist,
- **R**^{**4**}: die Bedeutung von **R** und
- **p**: 0 oder eine ganze Zahl von 1 bis 50 bedeuten.

Organosiliciumverbindung (E) besitzt vorzugsweise eine Viskosität von 10 bis 100 mPa^{·}s bei 25°C, insbesondere 30 bis 60 mPa^{·}s bei 25°C.

Organosiliciumverbindung (E) wird in Mengen von vorzugsweise 0 bis 30 Gewichtsteilen, besser 0,5 bis 20 Gewichtsteilen, insbesondere 1 bis 15 Gewichtsteilen, jeweils bezogen auf 100 Gewichtsteile Polyorganosiloxan (A), eingesetzt.

Beispiele für Reste **R**^{**3**} sind Alkylreste, wie der Methyl-, Ethyl-, n-Propyl-, iso-Propyl-, 1-n-Butyl-, 2-n-Butyl-, iso-Butyl- und tert.-Butylrest. Bevorzugt sind der Methyl- und Ethylrest. Beispiele für Reste **R**^{**3**}, die durch ein Ethersauerstoffatom substituiert sind, sind der Methoxyethyl- und Ethoxyethylrest.

Beispiele und bevorzugte Beispiele für Reste **R**^{**4**} sind vorstehend für die Reste **R** aufgeführt.

Besonders bevorzugt als Organosiliciumverbindung (E) sind α,ω-Dihydroxydimethylpolysiloxane mit einer Viskosität von 30 bis 60 mPa^{·}s bei 25°C.

Die Polyorganosiloxankautschukmassen können zusätzlich zu den Komponenten (A) bis (D) und gegebenenfalls (E) herkömmlicherweise mitverwendete Stoffe (F) enthalten. Beispiele für solche Stoffe (F) sind Farbpigmente, Hitzestabilisatoren, Additive zur Verminderung der Entflammbarkeit und Additive zur Verbesserung der ölbeständigkeit.

Die Komponenten (A) bis (D) und gegebenenfalls (E) und (F) können in beliebiger Reihenfolge gemischt und die Mischung vorzugsweise einer Wärmebehandlung und gegebenenfalls einer Entgasung unterworfen werden. Vorzugsweise werden die die Vernetzung fördernden Stoffe (C) erst nach der Wärmebehandlung zugesetzt.

In einer bevorzugten Ausführungsform werden die Komponenten (A), (B) und (D) vermischt und anschließend einer Wärmebehandlung unterworfen. Die Plastizität des Walzenfells ist dann noch höher und die Haftung auf einer Unterlage noch geringer, als wenn Carbaminat (D) nach einer Wärmebehandlung zugesetzt wird oder keine Wärmebehandlung erfolgt.

Die Erwärmung erfolgt vorzugsweise bei 100 bis 400°C, insbesondere bei 110 bis 250°C. Die Dauer der Erwärmung beträgt 15 Minuten bis 10 Stunden, vorzugsweise 2 bis 4 Stunden bei 140 bis 180°C. Während des Erwärmens kann ein leichter Unterdruck angelegt werden, um flüchtige Verunreinigungen zu entfernen.

Das Mischen kann beispielsweise erfolgen in Innenmischern, wie Sigmakneter, Knetern mit Stempeln, beispielsweise vom Banbury-Typ, kontinuierlichen oder diskontinuierlichen Walzwerken und Einwellen- oder Doppelwellenextrudern.

### Beispiele:

### Beispiel 1

100 Gewichtsteile eines Dimethylpolysiloxans mit endständigen Vinyldimethylsiloxaneinheiten und ca. 0,2 Mol-% Vinylmethylsiloxaneinheiten, das eine Viskosität von ca. 10⁶ mPa^{·}s bei 25°C besitzt, 50 Gewichtsteile einer gefällten Kieselsäure mit einer BET-Oberfläche von ca. 120m²/g, 2 Gewichtsteile eines α,ω-Dihydroxydimethylpolysiloxans mit einer Viskosität von ca. 50 mPa^{·}s bei 25°C und 0,1 Gewichtsteil Ammoniumcarbaminat wurden vermischt und ca. 2 Stunden bei ca. 150°C geheizt. Die erhaltene Mischung wurde nach Abkühlen mit 0,7 Gew.-% Dicumylperbezogen auf das Gewicht der Masse versetzt, auf einem Walzenstuhl geknetet und zu einem Walzenfell verformt.

Die Fellfestigkeit wurde folgendermaßen beurteilt: Ein 2 cm starkes Walzenfell von ca. 10 cm Breite und 50 cm Länge wurde auf eine Glasplatte gelegt. Nach einer Lagerung von ca. 6 Stunden wurde die Längenänderung des Walzenfelles gemessen und die Kraft beurteilt, mit der sich das Fell von der Unterlage abziehen ließ. Die Meßwerte bedeuten:
+ etwas geringere Kraft erforderlich als üblich; ++ deutlich geringere Kraft erforderlich als üblich; +++ viel geringere Kraft erforderlich als üblich.

Aus dem Fell wurden durch Vulkanisation bei 165°C über einen Zeitraum von 15 Minuten Platten mit einer Stärke von 2 bzw. 6 mm hergestellt. Die Platten wurden anschließend 4 Stunden lang bei 200°C getempert.

Die Bestimmung der Härte, Reißfestigkeit, Reißdehnung und des Weiterreißwiderstandes erfolgte nach JIS C2123, die Bestimmung der Rückprallelastizität nach DIN 53512 und die Bestimmung des Druckverformungsrestes nach DIN 53517 22 Stunden lang bei 175°C. Die Williams Plastizität wurde für 3 Minuten bestimmt.

Die gemessenen Werte sind in der folgenden Tabelle unter A) dargestellt.

Eine weitere Mischung B) wurde wie oben zubereitet, mit dem Unterschied, daß das Ammoniumcarbaminat erst nach dem Erkalten zugegeben wurde. Bei Vergleich 1 wurde kein Ammoniumcarbaminat zugegeben. Als Vergleich 2 wurde eine Mischung wie in A) bereitet, in die anstelle von Ammoniumcarbaminat 0,2 Gewichtsteile Polytetrafluorethylen-Pulver eingearbeitet worden waren.

| | **Mischung A** | **Mischung B** | **Vergleich 1** | **Vergleich 2** |
|---|---|---|---|---|
| **Kautschuk** | | | | |
| Längenänderung (%) | 3 | 2 | 3 | 10 |
| Fellfestigkeit | +++ | ++ | Standard | +++ |
| Williams Plastizität | 265 | 232 | 194 | 243 |

| **Vulkanisat** | | | | |
|---|---|---|---|---|
| Härte JIS | 50 | 51 | 50 | 49 |
| Reißfestigkeit (kg/cm²) | 97 | 98 | 100 | 88 |
| Rückprallelastizität (%) | 78 | 76 | 71 | 61 |
| Druckverformungsrest (%) | 8 | 9 | 14 | 15 |

Der Vergleich zeigt, daß das bisher bekannte Additiv zur Verbesserung der Fell festigkeit den Nachteil einer starken Längenänderung des Kautschukrohlinges aufweist. Mischungen ohne Ammoniumcarbaminat weisen zugleich einen signifikant erhöhten Druckverformungsrest und eine tiefere Williams Plastizität auf. Durch Zugabe von Ammoniumcarbaminat werden Druckverformungsrest und Fellfestigkeit deutlich erhöht.

## Patentansprüche

1. Polyorganosiloxankautschukmassen, die in der Wärme zu Elastomeren aushärten, welche
(A) 100 Gewichtsteile eines Polyorganosiloxans der allgemeinen Formel (I)
R¹ ₓR₃₋ₓSiO(SiR₂O)ₘ(SiRR¹O)ₙSiR₃₋ₓR¹ ₓ, (I),
wobei
**R** gleiche oder verschiedene, einwertige, gegebenenfalls mit Halogenatomen oder Cyanogruppen substituierte Kohlenwasserstoffreste mit 1 bis 18 Kohlenstoffatomen je Rest,
**R**^{**1**} gleiche oder verschiedene, einwertige, ethylenisch ungesättigte Kohlenwasserstoffreste mit 1 bis 6 Kohlenstoffatomen je Rest,
**m** eine ganze Zahl von 100 bis 20000,
**n** den Wert 0 oder eine ganze Zahl von 1 bis 200 und
**x** die Werte 0 oder 1 bedeuten,
(B) 20 bis 200 Gewichtsteile Füllstoff,
(C) die Vernetzung fördernde Stoffe und
(D) 0,01 bis 1 Gewichtsteile Ammonium-, Alkali- oder Erdalkalicarbaminat umfassen.

2. Polyorganosiloxankautschukmassen nach Anspruch 1, bei denen das Polyorganosiloxan (A) eine Viskosität von 0,1^{·}10⁶ bis 100^{·}10⁶ mPa^{·}s bei 25°C besitzt.

3. Polyorganosiloxankautschukmassen nach Anspruch 1 oder 2, bei denen als Füllstoff (B) pyrogen hergestellte Kieselsäure oder gefällte Kieselsäure mit einer spezifischen Oberfläche (BET) von mindestens 50 m²/g verwendet wird.

4. Polyorganosiloxankautschukmassen nach einem der Ansprüche 1 bis 3, bei denen die die Vernetzung fördernden Stoffe (C) radikalbildende Vernetzer (C1) oder Si-gebundene Wasserstoffatome aufweisende Organopolysiloxane (C2) und Übergangsmetall-Hydrosilylierungskatalysatoren (C3) sind.

5. Polyorganosiloxankautschukmassen nach einem der Ansprüche 1 bis 4, bei denen das Carbaminat (D) Ammoniumcarbaminat ist.

6. Polyorganosiloxankautschukmassen nach einem der Ansprüche 1 bis 5, in denen 0,1 bis 0,5 Gewichtsteile Carbaminat (D), bezogen auf 100 Gewichtsteile Polyorganosiloxan (A) vorhanden sind.

7. Polyorganosiloxankautschukmassen nach einem der Ansprüche 1 bis 6, in denen niederviskose Organosiliciumverbindungen (E) mit einer Viskosität von 10 bis 100 mPa^{·}s bei 25°C, als Antistrukturmittel enthalten sind.

8. Verfahren zur Herstellung der Polyorganosiloxankautschukmassen gemäß einem der Ansprüche 1 bis 7, bei dem die Komponenten (A), (B) und (D) vermischt werden und anschließend die Mischung einer Wärmebehandlung unterworfen wird.

## Claims

1. Polyorganosiloxane rubber compositions which harden to an elastomer under the influence of heat and comprise
(A) 100 parts by weight of a polyorganosiloxane of the general formula (I)
R¹ ₓR₃₋ₓSiO(SiR₂O)ₘ(SiRR¹O)ₙSiR₃₋ₓR¹ ₓ, (I),
in which
R is identical or different monohydric hydrocarbon radicals which have 1 to 18 carbon atoms per radical and are optionally substituted by halogen atoms or cyano groups,
R¹ is identical or different monovalent ethylenically unsaturated hydrocarbon radicals having 1 to 6 carbon atoms per radical,
m is an integer from 100 to 20,000
n is the value 0 or an integer from 1 to 200 and
x is the value 0 or 1,
(B) 20 to 200 parts by weight of filler,
(C) substances which promote crosslinking and
(D) 0.01 to 1 part by weight of ammonium, alkali metal or alkaline earth metal carbamate.

2. Polyorganosiloxane rubber compositions according to Claim 1, in which the polyorganosiloxane (A) has a viscosity of 0.1 × 10⁶ to 100 × 10⁶ mPa·s at 25°C.

3. Polyorganosiloxane rubber compositions according to Claim 1 or 2, in which pyrogenically prepared silicic acid or precipitated silicic acid having a specific surface area (BET) of at least 50 m²/g is used as the filler (B).

4. Polyorganosiloxane rubber compositions according to one of Claims 1 to 3, in which the substances (C) which promote crosslinking are crosslinking agents (C1) which form free radicals or organopolysiloxanes (C2) which contain Si-bonded hydrogen atoms and transition metal hydrosilylation catalysts (C3).

5. Polyorganosiloxane rubber compositions according to one of Claims 1 to 4, in which the carbamate (D) is ammonium carbamate.

6. Polyorganosiloxane rubber compositions according to one of Claims 1 to 5, in which 0.1 to 0.5 parts by weight of carbamate (D) are present per 100 parts by weight of polyorganosiloxane (A).

7. Polyorganosiloxane rubber compositions according to one of Claims 1 to 6, which comprises low-viscosity organosilicone compounds (E) having a viscosity of 10 to 100 mPa·s at 25°C as an antistructuring agent.

8. Process for the preparation of the polyorganosiloxane rubber compositions according to one of Claims 1 to 7, in which components (A), (B) and (D) are mixed and the mixture is then subjected to heat treatment.

## Revendications

1. Compositions de caoutchouc de polyorganosiloxane qui durcissent à la chaleur pour donner des élastomères et qui renferment
(A) 100 parties en poids d'un polyorganosiloxane de formule générale (I)
R¹ ₓR₃₋ₓSiO(SiR₂O)ₘ(SiRR¹O)ₙSiR₃₋ₓR¹ ₓ, (I),
dans laquelle
R représente des radicaux hydrocarbonés monovalents, identiques ou différents, ayant de 1 à 18 atomes de carbone par radical et éventuellement substitués par des atomes d'halogène ou des groupes cyano,
R¹ représente des radicaux hydrocarbonés monovalents éthyléniquement insaturés, identiques ou différents, ayant de 1 à 6 atomes de carbone par radical,
m représente un entier de 100 à 20 000,
n vaut 0 ou représente un entier de 1 à 200 et
x vaut 0 ou 1,
(B) de 20 à 200 parties en poids de charge,
(C) des substances favorisant la réticulation et
(D) de 0,01 à 1 partie en poids de carbamate d'ammonium, de métal alcalin ou de métal alcalino-terreux.

2. Compositions de caoutchouc de polyorganosiloxane selon la revendication 1, dans lesquelles le polyorganosiloxane (A) présente une viscosité de 0,1.10⁶ à 100.10⁶ mPa.s à 25°C.

3. Compositions de caoutchouc de polyorganosiloxane selon la revendication 1 ou 2, dans lesquelles on utilise, en tant que charge (B), de l'acide silicique préparé par pyrogénation ou de l'acide silicique précipité ayant une surface spécifique (BET) d'au moins 50 m²/g.

4. Compositions de caoutchouc de polyorganosiloxane selon l'une quelconque des revendications 1 à 3, dans lesquelles les substances favorisant la réticulation (C) sont des agents de réticulation (C1) générant des radicaux libres ou des organopolysiloxanes (C2) renfermant des atomes d'hydrogène liés à Si et des catalyseurs d'hydrosilylation à métal de transition (C3).

5. Compositions de polyorganosiloxane selon l'une quelconque des revendications 1 à 4, dans lesquelles le carbamate (D) est le carbamate d'ammonium.

6. Compositions de caoutchouc de polysiloxane selon l'une quelconque des revendications 1 à 5, dans lesquelles de 0,1 à 0,5 partie en poids de carbamate (D) est présente pour 100 parties en poids de polyorganosiloxane (A).

7. Compositions de caoutchouc de polyorganosiloxane selon l'une quelconque des revendications 1 à 6, dans lesquelles des composé des organosiliciés peu visqueux (E) ayant une viscosité de 10 à 100 mPa.s à 25°C sont présents en tant qu'agent antistructure.

8. Procédé de préparation des compositions de caoutchouc de polyorganosiloxane selon l'une quelconque des revendications 1 à 7, dans lequel les composants (A), (B) et (D) sont mélangés et le mélange est ensuite soumis à un traitement thermique.
